# EUROPÄISCHE PATENTSCHRIFT

(11) **EP 4 009 802 B1**
(45) Veröffentlichungstag und Bekanntmachung des Hinweises auf die Patenterteilung: **02.09.2026**
(21) Anmeldenummer: 21801008.0
(22) Anmeldetag: 23.09.2021
(51) Int. Cl.: A23G 4/06, A23G 4/20, A23G 4/18

(54) **KAUGUMMI MIT FLÜSSIGER FÜLLUNG**
CHEWING GUM WITH A LIQUID FILLING
GOMME À MÂCHER À GARNITURE LIQUIDE

(30) Priorität: 30.10.2020 DE 102020213676
(43) Veröffentlichungstag der Anmeldung: 15.06.2022
(73) Patentinhaber: Ascom Confection GmbH, 69190 Walldorf (DE)
(72) Erfinder: MAGNI, Marco, 69190 Walldorf (DE); GIANOGLIO BERNARDI, Riccardo, 76646 Bruchsal (DE); YUECE, UEmit, 69168 Wiesloch (DE)
(74) Vertreter: Ullrich & Naumann PartG mbB
(86) Internationale Anmeldenummer: PCT/DE2021/200127
(87) Internationale Veröffentlichungsnummer: WO 2022/089693

(56) Entgegenhaltungen:
- WO-A2-2006/127605
- GB-A- 2 427 343
- RU-C1- 2 197 094
- US-A1- 2013 034 625

## Beschreibung

Die Erfindung betrifft einen Kaugummi mit flüssiger Füllung, umfassend eine Kaugummimasse, die einen oder mehrere Hohlräume aufweist, und eine flüssige Füllung, die sich in den Hohlräumen befindet.

Flüssigkeitsgefüllte Süßwaren sind seit Jahren aus der Praxis bekannt. Füllungen aus beispielsweise Fruchtsäften, Zuckern, Sirupen, Farbstoffen und/oder Aromen werden in Gummibonbons, Schokoladenpralinen und Kaugummis verwendet. Diese Süßwaren sprechen zumeist die gesamten Endverbraucher an und sind nicht speziell auf bestimmte Zielgruppen gerichtet. Kaugummis mit einem zentralen süßen flüssigkeitsgefüllten Kern werden, beispielsweise, vor allem an Jugendliche verkauft.

Ein Kaugummi besteht grundsätzlich aus einem essbaren und einem nicht-essbaren Teil. Der essbare Teil besteht dabei zumeist aus Polyolen, Süßungsmitteln, Geschmacksstoffen, Farbstoffen, Säuren, pH-Regulatoren sowie weiteren Bestandteilen. Der nicht-essbare Teil ist größtenteils die Kaugummimasse, die aus beispielsweise Fetten, Harzen, Polymeren usw. besteht.

Ein flüssigkeitsgefüllter Kaugummi weist zumeist einen zentralen Hohlraum auf, der die flüssige Füllung beinhaltet. Die Füllung enthält dabei ein viskoses Gemisch aus flüssigen Polyolen. Typischerweise werden Maltitol, Sirupe und Glycerin verwendet. Oftmals werden diesem Gemisch auch Zucker, Maissirup, Farbstoffe, Verdickungsmittel und/oder Aromen zugesetzt.

Um neue Zielgruppen anzusprechen, die beispielsweise durch die Wahl neuer Distributionskanäle abseits der traditionellen Supermärkte erreicht werden können, setzen Kaugummihersteller auf Kaugummis mit ungewöhnlichen Eigenschaften.

Als Beispiel für eine auf eine bestimmte Zielgruppe zugeschnittene Süßware, sind alkoholhaltige Schokoladenpralinen zu nennen. Die Zielgruppe für alkoholgefüllte Schokoladenpralinen sind üblicherweise Erwachsene bis ins hohe Alter. Diese Süßwaren weisen eine flüssige alkoholhaltige Füllung auf. Oftmals werden diese Pralinen mit Aromen oder Konzentraten bekannter Spirituosen gefüllt, um die Vermarktung zu verbessern.

Problematisch bei der Verwendung einer alkoholhaltigen flüssigen Füllung in einem Kaugummi ist, dass sowohl der Wasseranteil als auch der Alkoholanteil der Füllung eine gewisse Affinität zu dem essbaren und dem nicht-essbaren Teil des Kaugummis aufweist.

Aus US 2013/0034625 A1 ist ein Kaugummiartikel bekannt, der ein alkoholisches Getränk als flüssige Füllung enthält, das in einem oder mehreren Hohlräumen im Kaugummi vorhanden ist. Das alkoholische Getränk kann Wodka, Whiskey, Gin, Brandy, Rum oder Tequila sein, die bekanntermaßen einen Alkoholgehalt von mindestens 30 % (v/v) haben.

WO 2006/127605 A2 offenbart eine Vielzahl von Kaugummizusammensetzungen. Der Kaugummi kann eine Füllung enthalten, die eingekapselt ist. Die Druckschrift offenbart, dass Komponenten, die eine wärmende Wirkung haben, in der Füllung enthalten sein können, wie etwa Capsaicin, Gingerol oder schwarzer Pfefferextrakt. Außerdem kann die Füllung des Kaugummis Ethanol enthalten. Außerdem kann die Kaugummizusammensetzung alkoholische Aromen enthalten, wie Weinaroma, Whiskyaroma, Brandyaroma, Rumaroma, Ginaroma oder Liköraroma. Alkoholische Aromen sind nicht mit alkoholischen Getränken gleichzusetzen. Beispielsweise wird das typische Rumaroma zum Backen durch einen Carbonsäureester hervorgerufen und enthält keinen Alkohol. Somit offenbart diese Druckschrift keine flüssige Füllung mit einem alkoholischen Getränk.

Aus RU 2 197 094 C1 ist eine Kaugummizusammensetzungen mit bestimmten Eigenschaften wie Geschmack, Konsistenz und Aroma bekannt. Der Kaugummi kann als flüssigen Inhalt ein alkoholisches Getränk wie Cognac, Wodka oder Bier enthalten. Die Druckschrift stellt eine Lösung zur Aufnahme einer Flüssigkeitsfüllung, z.B ein alkoholisches Getränk mit einem Feuchtigkeitsgehalt von mehr als 15 %, im Kaugummi bereit. Zwangsläufig ist die flüssige Füllung in einer aus Lebensmittelmaterial hergestellten Kapsel enthalten, um einen direkten Kontakt der flüssigen Füllung mit der Gummibase zu verhindern. Dementsprechend beschreibt diese Druckschrift einen Kaugummi mit eingekapselten Füllungen.

GB 2 427 343 A beschreibt eine versiegelte Kapsel in Lebensmittelqualität für Kaugummi, wobei die Kapsel Alkohol enthält. Die Kapsel besteht aus Bienenwachs und wird in den Kaugummi eingelegt.

Der vorliegenden Erfindung liegt nun die Aufgabe zugrunde, einen Kaugummi mit alkoholhaltigen flüssiger Füllung anzugeben, der lagerstabil und für den Konsumenten sensorisch wie auch geschmacklich akzeptabel ist.

Die voranstehende Aufgabe wird durch die vorliegende Erfindung gelöst. Danach ist das Kaugummi dadurch gekennzeichnet, dass die flüssige Füllung Alkohol enthält, wobei der Alkohol in Form eines alkoholischen Getränks in der flüssigen Füllung enthalten ist, wobei das alkoholische Getränk in einer Lösung aus Polyolen verdünnt und mit bis zu 10 Gew.-% in der flüssigen Füllung enthalten ist.

Ein alkoholisches Getränk ist eine alkoholhaltige Lösung, die durch Destillation, Fermentation, Verdünnung und/oder Vermischung mit Ethanol erhalten werden kann.

Ein Vorteil bei der Verwendung von alkoholischen Getränken ist, dass neben dem Alkohol auch andere Bestandteile, wie etwa Aromen und/oder Süßungsmittel, wie beispielweise Zucker, in die flüssige Füllung eingebracht werden können.

Das alkoholische Getränk kann dabei ausgewählt sein aus beispielsweise Wein, Schaumwein, Bier, Wermut, Spirituosen oder Mischgetränken, wie etwa Cocktails oder Longdrinks. Vorzugsweise ist das alkoholische Getränk eine Spirituose.

Der Begriff Spirituose umfasst dabei sowohl das direkt aus dem Brennverfahren gewonnene Destillat, das zumeist einen Alkoholgehalt zwischen 70 Vol.-% und 95 Vol.-% aufweist, als auch Verdünnungen dieser Destillate mit einem Alkoholgehalt zwischen 30 Vol.-% und 50 Vol.-%, vorzugsweise zwischen 35 Vol.-% und 45 Vol.-%.

Das unverdünnte Destillat enthält den höchsten Alkoholgehalt und die höchste Konzentration an Aromen der jeweiligen Spirituose. Durch die Verwendung des Destillats in der flüssigen Füllung kann somit in vorteilhafter Weise sowohl der höchste Alkoholgehalt in der flüssigen Füllung als auch die beste Aromatisierung der Füllung erzielt werden.

Entsprechend weist das alkoholische Getränk in einer vorteilhaften Ausführungsform einen Alkoholgehalt von mehr als 30 Vol.-% auf. Vorzugsweise weist das alkoholische Getränk einen Alkoholgehalt von mehr als 40 Vol.-% auf, bevorzugt mehr als 50 Vol.-%.

Der Alkoholgehalt des alkoholischen Getränks liegt vorteilhafterweise zwischen 30 Vol.-% und 95 Vol.-%, vorzugsweise zwischen 40 Vol.-% und 90 Vol.-%, bevorzugt zwischen 45 Vol.-% und 80 Vol.-%.

In einer vorteilhaften Ausführungsform ist das alkoholische Getränk ein Destillat mit einem Alkoholgehalt im Bereich von 70 Vol.-% bis 95 Vol.-%.

Die Spirituose kann beispielsweise ausgewählt sein aus Gin, Rum, Whisky, Weinbrand, Cognac, Grappa, Wodka, Obstbränden, Kornbränden, Aquavit, Pastis, und Likör, insbesondere Kräuterlikör.

Wasser tendiert dazu, in die Kaugummimasse zu migrieren. Dabei handelt es sich um einen kontinuierlichen Prozess und um geringe Volumina des Wassers. Über einen längeren Zeitraum kann diese Migration des Wassers nachteilig für die Lagerfähigkeit des Kaugummis sein. Um diesen Nachteil zu vermeiden, kann der Wassergehalt in der flüssigen Füllung so gering wie möglich gehalten werden.

Die Grundbestandteile der flüssigen Füllung umfassen beispielsweise flüssige Polyole, wie etwa Maltitolsirup und/oder Glycerin. Des Weiteren können weitere Sirupe, wie etwa Glukosesirup verwendet werden. Die Sirupe enthalten geringe Anteile von Wasser. Weiteres Wasser ist in der flüssigen Füllung durch die Verwendung des alkoholischen Getränks vorhanden. Die flüssige Füllung weist jedoch einen hohen Gehalt an gelösten Teilchen auf, was zu einer geringen Wasseraktivität führt, sodass das Wasser nicht in die Kaugummimasse migriert.

Üblicherweise enthalten alkoholische Getränke mehr als 50 Vol.-% Wasser. Um den Wassergehalt zu reduzieren und gleichzeitig auch den Alkoholgehalt des alkoholischen Getränks, kann das Destillat nach dem Brennen in einer Lösung aus Polyolen, wie etwa Maltitol und/oder Glycerin, verdünnt werden. Beispielsweise handelt es sich bei der Lösung um ein Sirup, wie etwa Maltitolsirup.

Erfindungsgemäß wird das alkoholische Getränk in einer Lösung aus Polyolen verdünnt. Außerdem wird das alkoholische Getränk in den weiteren Bestandteilen der flüssigen Füllung verdünnt.

Die Verwendung von beispielsweise Maltitol und/oder Glycerin in flüssigen Füllungen für Süßwaren ist bekannt. Außerdem werden üblicherweise Sorbitol, Glukosesirup oder gesättigte Zuckerlösungen, wie etwa Saccharose-, Fruktose- oder Dextroselösungen, verwendet. Diese Bestandteile erlauben ein Zerfließen der flüssigen Füllung nach aufbeißen der Hohlräume in der Kaugummimasse. Der Füllung können weitere Bestandteile zugefügt werden, wie beispielsweise weitere Süßungsmittel, Farbstoffe, Verdickungsmittel und/oder Aromen. Als weitere Süßungsmittel kommen beispielsweise Zucker oder Zuckerersatzstoffe, wie etwa Acesulfam K, Aspartam oder Sucralose, in Betracht. Diese Bestandteile können insgesamt bis zu 99 Gew.-% der flüssigen Füllung ausmachen. Vorzugsweise werden diese Bestandteile zu 50 Gew.-% bis 95 Gew.-% in der Füllung eingesetzt.

Das alkoholische Getränk ist mit bis zu 10 Gew.-% in der flüssigen Füllung enthalten, vorzugsweise mit bis zu 7 Gew.-%, bevorzugt mit bis zu 5 Gew.-%. In vorteilhafter Weise ist das alkoholische Getränk mit einem Anteil im Bereich von 0,5 Gew.-% bis 10 Gew.-%, vorzugsweise in einem Bereich von 1 Gew.-% bis 7 Gew.-%, bevorzugt in einem Bereich von 2 Gew.-% bis 5 Gew.-%, in der flüssigen Füllung enthalten.

Bei einem niedrigen Alkoholgehalt der flüssigen Füllung kann es vorkommen, dass der Konsument den typischen Wärmeeffekt des Alkohols nur schwach wahrnimmt. In der flüssigen Füllung können daher weitere Bestandteile enthalten sein, die den Wärmeeffekt verstärken. Beispielsweise kommen als solche Bestandteile Capsicumextrakt, Pfefferpulver, Pfefferextrakt und/oder Ingwerextrakt in Betracht.

In einer vorteilhaften Ausführungsform enthält die flüssige Füllung Capsicumextrakt. Capsicumextrakt wird aus Pflanzen der Gattung Capsicum gewonnen. Vertreter dieser Pflanzengattung sind beispielsweise Gemüsepaprika, Chili, Peperoni, Perperoncini oder Pfefferoni. Das Extrakt kann durch Mahlen der Früchte oder durch Extraktion aus diesen Früchten gewonnen werden. Die in dem Capsicumextrakt enthaltenen Capsaicinoide, vor allem Capsaicin, verursachen im Mundraum einen Hitze- bzw. Schmerzreiz, der als Schärfe wahrgenommen wird.

Um zu vermeiden, dass die flüssige Füllung zu scharf für den Verzehr ist bzw. dass die Schärfe den Geschmack des Kaugummis negativ beeinträchtigt, darf der Bestandteil, der den Wärmeeffekt verstärkt, nicht überdosiert werden. Es hat sich gezeigt, dass ein Gehalt von bis zu 0,015 Gew.-% des Bestandteils, der den Wärmeeffekt verstärkt, in der flüssigen Füllung den Konsum des Kaugummis nicht negativ beeinträchtigt. Unter 0,002 Gew.-% in Bezug auf die flüssige Füllung wird die verstärkende Wirkung auf den Wärmeeffekt jedoch kaum noch wahrgenommen.

Entsprechend kann in einer weiteren Ausführungsform der wärmeverstärkende Bestandteil in der flüssigen Füllung in einem Bereich von 0,002 Gew.-% bis 0,015 Gew.-% vorliegen. Bevorzugt liegt der wärmeverstärkende Bestandteil in der flüssigen Füllung in einem Bereich von 0,003 Gew.-% bis 0,01 Gew.-% vor, vorzugsweise um etwa 0,005 Gew.-%.

Gemäß der vorliegenden Erfindung ist ein Hohlraum definiert als ein hohler Innenraum, der ein bestimmtes Volumen aufweist, das von der Kaugummimasse umschlossen ist. Dieses Volumen kann komplett oder teilweise mit der flüssigen Füllung ausgefüllt sein. Hohlräume, die eine verkapselte flüssige Füllung enthalten, können entweder mehrere kleinere Kapseln enthalten oder so ausgestaltet sein, dass die Kapselhülle einer Kapsel an der Hohlraumoberfläche anliegt.

In einer vorteilhaften Ausführungsform weist die Kaugummimasse einen zentralen Hohlraum auf. Die Herstellung eines Kaugummis mit einem zentralen Hohlraum ist technisch leicht zu realisieren. Des Weiteren bietet ein zentraler Hohlraum, der entsprechend mit einer flüssigen Füllung gefüllt ist, ein überraschendes Kauerlebnis für den Konsumenten. Durch das Aufbeißen des Hohlraums und das anschließende herausfließen der flüssigen Füllung in den Mundraum wird ermöglicht, dass ein möglichst großer Bereich der Sinneszellen im Mundraum mit der Füllung in Berührung kommt.

Ein zentraler Hohlraum hat außerdem den Vorteil, dass die Oberfläche der Kaugummimasse, die mit der flüssigen Füllung in Kontakt kommt, möglichst klein bleibt. Somit wird das Migrieren einzelner Bestandteile aus der flüssigen Füllung in die Kaugummimasse reduziert. Der Kaugummi ist dadurch länger haltbar.

In einer weiteren vorteilhaften Ausführungsform sind mehrere Hohlräume in der Kaugummimasse verteilt. Diese Hohlräume können gleichmäßig oder ungleichmäßig in der Kaugummimasse verteilt sein. Diese Hohlräume sind entsprechend kleiner dimensioniert als ein zentraler Hohlraum.

Mehrere verteilte und mit einer flüssigen Füllung gefüllte Hohlräume ermöglichen es, dass der Kaugummi länger seinen Geschmack beibehält, da nicht alle Hohlräume gleichzeitig aufgebissen werden. Im Gegensatz zu einem Kaugummi mit einem zentralen Hohlraum ist ein Kaugummi mit mehreren Hohlräumen nicht zwingend an eine Form gebunden. So kann der Kaugummi mit mehreren Hohlräumen auch beispielsweise in Form eines Kaugummistreifens vorliegen.

In einer weiteren Ausführungsform liegt die flüssige Füllung in einer essbaren Kapsel vor. Das Verkapseln der flüssigen Füllung verhindert, dass Bestandteile der flüssigen Füllung in die angrenzende Kaugummimasse migrieren und diese negativ beeinflussen. Entsprechend führt eine Verkapselung der flüssigen Füllung dazu, dass die Haltbarkeit des Kaugummis erhöht wird. Außerdem wird verhindert, dass der Kaugummi schnell seinen Geschmack verliert.

Geeignete Kapselhüllen für Süßwaren sind hinlänglich bekannt und können ausgewählt sein aus beispielsweise Gelatine, Alginaten, Carrageen, Cellulose und Cellulosederivaten sowie Gummi arabicum.

In einer weiteren Ausführungsform kann der Kaugummi mit einer Beschichtung versehen werden.

Durch die Erfindung wird erreicht, dass der Kaugummi über mehrere Monate, mindestens jedoch 6 Monate, lagerstabil ist. Somit ist der Kaugummi für über 6 Monate, vorzugsweise über 12 Monate, bevorzugt über 24 Monate lagerstabil.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgenden Ausführungsbeispiele der Erfindung zu verweisen.

### Beispiel 1

Das vorliegende Beispiel zeigt zwei exemplarische Zusammensetzungen für eine Kaugummimasse.

| | A) | B) |
|---|---|---|
| Kaugummigrundmasse | 30 Gew.-% | 35 Gew.-% |
| Maltitolsirup | 15 Gew.-% | 10 Gew.-% |
| Xylitol | 5 Gew.-% | 35 Gew.-% |
| Mannitol | 5 Gew.-% | 5 Gew.-% |
| Sorbitol | 10 Gew.-% | 10 Gew.-% |
| Maltitol | 30 Gew.-% | --- |
| Flüssiges Aroma | 2 Gew.-% | 2 Gew.-% |
| Aroma (Pulver) | 2 Gew.-% | 2 Gew.-% |
| Farbstoffe | 1 Gew.-% | 1 Gew.-% |

### Beispiel 2

Das vorliegende Beispiel zeigt zwei exemplarische Zusammensetzungen für eine flüssige Füllung des Kaugummis.

Zusammensetzung A):

| | |
|---|---|
| Alkoholisches Getränk: | 8 Gew.-% |
| Capsicumextrakt: | 0,01 Gew.-% |
| Aroma | 1 Gew.-% |
| Farbstoff | 1 Gew.-% |
| Verdickungsmittel (optional) | 1 Gew.-% |
| Glycerin | 40 Gew.-% |
| Maltitolsirup | 48,99 Gew.-% |

Zusammensetzung B):

| | |
|---|---|
| Alkoholisches Getränk: | 3 Gew.-% |
| Capsicumextrakt: | 0,005 Gew.-% |
| Aroma | 1 Gew.-% |
| Farbstoff | 1 Gew.-% |
| Verdickungsmittel (optional) | 1 Gew.-% |
| Maltitolsirup | 48 Gew.-% |
| Glycerin | 45,995 Gew.-% |

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Kaugummis lediglich zur Erörterung der beanspruchten Lehre dienen, diese jedoch nicht auf die Ausführungsbeispiele einschränken.

## Patentansprüche

1. Kaugummi mit flüssiger Füllung, umfassend eine Kaugummimasse, die einen oder mehrere Hohlräume aufweist, und eine flüssige Füllung, die sich in den Hohlräumen befindet,
**dadurch gekennzeichnet, dass** die flüssige Füllung Alkohol enthält, wobei der Alkohol in Form eines alkoholischen Getränks in der flüssigen Füllung enthalten ist, wobei das alkoholische Getränk in einer Lösung aus Polyolen verdünnt und mit bis zu 10 Gew.-% in der flüssigen Füllung enthalten ist.

2. Kaugummi nach Anspruch 1, **dadurch gekennzeichnet, dass** der Alkohol in Form einer Spirituose in der flüssigen Füllung enthalten ist.

3. Kaugummi nach Anspruch 2, **dadurch gekennzeichnet, dass** das alkoholische Getränk einen Alkoholgehalt von mehr als 30 Vol.-% aufweist.

4. Kaugummi nach einem der Ansprüche 1 bis 3, **dadurch gekennzeichnet, dass** die flüssige Füllung ferner einen Bestandteil enthält, der den Wärmeeffekt des Alkohols verstärkt, vorzugsweise ist der Bestandteil ausgewählt aus Capsicumextrakt, Pfefferpulver, Pfefferextrakt und Ingwerextrakt.

5. Kaugummi nach Anspruch 4, **dadurch gekennzeichnet, dass** der Bestandteil, der den Wärmeeffekt des Alkohols verstärkt, in einem Bereich von 0,002 Gew.-% bis 0,015 Gew.-% vorliegt.

6. Kaugummi nach einem der Ansprüche 1 bis 5, **dadurch gekennzeichnet, dass** die flüssige Füllung in einer essbaren Kapsel vorliegt.

7. Verfahren zur Herstellung eines Kaugummis nach einem der Ansprüche 1 bis 6, **dadurch gekennzeichnet, dass** die flüssige Füllung direkt in die Hohlräume gefüllt wird oder dass die flüssige Füllung in essbare Kapseln gefüllt wird, die mit der Kaugummimasse vermengt werden, wobei das alkoholische Getränk in einer Lösung aus Polyolen verdünnt wird.

## Claims

1. A chewing gum with a liquid filling, comprising a chewing gum mass having one or more cavities, and a liquid filling that is present in the cavities,
**characterized in that** the liquid filling contains alcohol, wherein the alcohol is contained in the liquid filling in the form of an alcoholic beverage, wherein the alcoholic beverage is diluted in a solution of polyols and has a content of up to 10 wt% in the liquid filling.

2. The chewing gum according to claim 1, **characterized in that** the alcohol is contained in the liquid filling in the form of a spirit.

3. The chewing gum according to claim 2, **characterized in that** the alcoholic beverage has a alcohol content of greater than 30 vol%.

4. The chewing gum according to one of claims 1 through 3, **characterized in that** the liquid filling further contains a component that intensifies the warming effect of the alcohol, with the component preferably being selected from capsicum extract, pepper powder, pepper extract, and ginger extract.

5. The chewing gum according to claim 4, **characterized in that** the component that intensifies the warming effect of the alcohol is present in a range of 0.002 wt% to 0.015 wt%.

6. The chewing gum according to one of claims 1 through 5, **characterized in that** the liquid filling is present in an edible capsule.

7. A method for producing a chewing gum according to one of claims 1 through 6, **characterized in that** the liquid filling is filled directly into the cavities, or that the liquid filling is filled into edible capsules that are mixed with the chewing gum mass, wherein the alcoholic beverage are diluted in a solution of polyols.

## Revendications

1. Gomme à mâcher à garniture liquide, comprenant une pâte de gomme à mâcher présentant une ou plusieurs cavités, et une garniture liquide se trouvant dans les cavités, **caractérisée en ce que** la garniture liquide contient de l'alcool, l'alcool étant présent dans la garniture liquide sous la forme d'une boisson alcoolisée, laquelle est diluée dans une solution de polyols et représente jusqu'à 10 % en poids du remplissage liquide.

2. Gomme à mâcher selon la revendication 1, **caractérisée en ce que** l'alcool est présent dans la garniture liquide sous la forme d'un spiritueux.

3. Gomme à mâcher selon la revendication 2, **caractérisée en ce que** la boisson alcoolisée présente une teneur en alcool supérieure à 30 % vol.

4. Gomme à mâcher selon l'une des revendications 1 à 3, **caractérisée en ce que** la garniture liquide contient en outre un composant qui renforce l'effet chauffant de l'alcool, ce composant étant de préférence choisi parmi l'extrait de capsicum, la poudre de poivre, l'extrait de poivre et l'extrait de gingembre.

5. Gomme à mâcher selon la revendication 4, **caractérisée en ce que** le composant qui renforce l'effet chauffant de l'alcool est présent à une teneur comprise entre 0,002 % en poids et 0,015 % en poids.

6. Gomme à mâcher selon l'une des revendications 1 à 5, **caractérisée en ce que** la garniture liquide se présente sous la forme d'une capsule comestible.

7. Procédé de fabrication d'une gomme à mâcher selon l'une des revendications 1 à 6, **caractérisé en ce que** la garniture liquide est introduite directement dans les cavités ou **en ce que** la garniture liquide est introduite dans des capsules comestibles qui sont mélangées à la pâte de gomme à mâcher, la boisson alcoolisée étant diluée dans une solution de polyols.
